# EUROPEAN PATENT APPLICATION

(11) **EP 4 797 822 A1**
(43) Date of publication of application: **26.08.2026**
(21) Application number: 24887602.1
(22) Date of filing: 02.09.2024
(51) Int. Cl.: H04W 68/00

(54) **COMMUNICATION METHOD AND APPARATUS**

(30) Priority: 07.11.2023 CN 202311479880
(71) Applicant: HUAWEI TECHNOLOGIES CO., LTD., Shenzhen 518129 (CN)
(72) Inventor: SUN, Huan, Shenzhen, Guangdong 518129 (CN); LUO, Zhihu, Shenzhen, Guangdong 518129 (CN)
(74) Representative: Pfenning, Meinig & Partner mbB
(86) International application number: PCT/CN2024/116286
(87) International publication number: WO 2025/097983

(57) **Abstract**

This application provides a communication method and apparatus, to resolve a problem of paging RedCap UE in an idle state or an inactive state. The method includes: sending first information, where the first information indicates that a first-type terminal device supports monitoring a paging message and/or a paging early indication in a first initial downlink bandwidth part that does not include an entire CORESET#0; receiving second information, where the second information is used for configuring the first initial downlink bandwidth part; and monitoring the paging message and/or the paging early indication based on the second information. According to the foregoing solution, power consumption required for radio frequency retuning can be reduced, and paging load of an initial DL BWP can be reduced.

## Description

### CROSS-REFERENCE TO RELATED APPLICATIONS

This application claims priority to Chinese Patent Application No. 202311479880.0, filed with the China National Intellectual Property Administration on November 7, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An initial downlink bandwidth part of reduced capability (reduced capability, RedCap) user equipment (RedCap UE) (RedCap-specific initial DL BWP) is less than an initial downlink bandwidth part (initial DL BWP). In other words, a RedCap-specific initial DL BWP is configured in the initial DL BWP. A central position of the initial DL BWP includes a control resource set (control resource set, CORESET) #0, and the CORESET#0 includes a common search space used by a terminal device for monitoring paging. Because the RedCap-specific initial DL BWP is a subset of the initial DL BWP, there are two configuration results for a frequency domain resource position of the initial downlink bandwidth part of the RedCap UE. A configuration result is that the RedCap-specific initial DL BWP does not include an entire CORESET#0. In this manner, radio frequency of the RedCap UE is retuned to an initial downlink bandwidth part (initial DL BWP) including the entire CORESET#0 to monitor a paging message. Another configuration result is that the RedCap-specific initial DL BWP includes the entire CORESET#0. In this manner, the RedCap UE may monitor the paging message in the CORESET#0. When the RedCap-specific initial DL BWP does not contain the entire CORESET#0, the RedCap-specific UE cannot monitor paging on a current RedCap-specific initial DL BWP if the RedCap UE is in an idle (IDLE) or an inactive (INACTIVE) state. Therefore, paging the RedCap UE in the idle state or the inactive state becomes an urgent problem to be resolved.

### SUMMARY

This application provides a communication method and apparatus, to resolve a problem of paging RedCap UE in an idle state or an inactive state.

According to a first aspect, this application provides a communication method. The method may be performed by a terminal device, or may be performed by a chip or a circuit. Using the terminal device as an example, the method includes: determining a first bandwidth part from M bandwidth parts based on a terminal device identifier of a first terminal device, and monitoring a paging message in the first bandwidth part. The M bandwidth parts include a first initial downlink bandwidth part and a second initial downlink bandwidth part, M is an integer greater than or equal to 2, the first initial downlink bandwidth part is for a first-type terminal device, the first initial downlink bandwidth part does not include a CD-SSB and an entire CORESET#0, and the second initial downlink bandwidth part is configured for a serving cell and includes the entire CORESET#0 in frequency domain of the serving cell.

In this application, a bandwidth part is determined, based on the identifier of the terminal device itself, from a plurality of bandwidth parts supporting paging for monitoring the paging message, so that paging messages of the plurality of terminal devices may be distributed over different bandwidth parts based on the identifier of the terminal device, to avoid paging congestion and balancing paging load on bandwidth parts.

In a possible design, the determining the first bandwidth part from M bandwidth parts based on the terminal device identifier includes: determining, based on the terminal device identifier and weight factors respectively corresponding to the M bandwidth parts, a bandwidth part in which the paging message is located. Load balancing of each bandwidth part may be balanced according to the foregoing manner.

In a possible design, the determining, based on the terminal device identifier and the weight factors respectively corresponding to the M bandwidth parts, the bandwidth part in which the paging message is located includes: determining the first bandwidth part by performing a modulo operation on a sum of the weight factors of the M bandwidth parts based on the terminal device identifier. Load balancing of each bandwidth part may be balanced according to the foregoing manner.

In a possible design, the determining, based on the terminal device identifier and the weight factors respectively corresponding to the M bandwidth parts, the bandwidth part in which the paging message is located includes: determining the first bandwidth part based on the terminal device identifier, a total quantity of paging occasions, and the weight factors respectively corresponding to the M bandwidth parts. Load balancing of each bandwidth part may be balanced according to the foregoing manner.

In a possible design, the first bandwidth part is a bandwidth part corresponding to a number of the paging message, and the number of the paging message satisfies the following formula: $floor \left(UE ID/\left(T*Ns\right)\right) mod {ΣW}_{i} .$

UE ID is the terminal device identifier, T is a quantity of paging frames, Ns is a quantity of paging occasions in one paging frame, and Wᵢ is a weight factor of an i^{th} bandwidth part of the M bandwidth parts.

In a possible design, before the determining the first bandwidth part from M bandwidth parts based on the terminal device identifier of the first terminal device, the method further includes: receiving first information, where the first information is used for configuring the first initial downlink bandwidth part.

In a possible design, the first information includes a first field, and the first field is used for configuring a PDCCH CSS set in the first initial downlink bandwidth part. According to the foregoing description, the first initial downlink bandwidth part may be enabled to support paging.

According to a second aspect, this application provides a communication method. The method may be performed by a network device, or may be performed by a chip or a circuit. Using a network device as an example, the method includes: determining a first bandwidth part from M bandwidth parts based on a terminal device identifier of a first terminal device, and sending a paging message in the first bandwidth part. The M bandwidth parts include a first initial downlink bandwidth part and a second initial downlink bandwidth part, M is an integer greater than or equal to 2, the first initial downlink bandwidth part is for a first-type terminal device, the first initial downlink bandwidth part does not include a CD-SSB and an entire CORESET#0, and the second initial downlink bandwidth part is configured for a serving cell and includes the entire CORESET#0 in frequency domain of the serving cell.

In a possible design, the determining the first bandwidth part from M bandwidth parts based on the terminal device identifier includes: determining, based on the terminal device identifier and weight factors respectively corresponding to the M bandwidth parts, a bandwidth part in which the paging message is located.

In a possible design, the determining, based on the terminal device identifier and the weight factors respectively corresponding to the M bandwidth parts, the bandwidth part in which the paging message is located includes: determining the first bandwidth part by performing a modulo operation on a sum of the weight factors of the M bandwidth parts based on the terminal device identifier.

In a possible design, the determining, based on the terminal device identifier and the weight factors respectively corresponding to the M bandwidth parts, the bandwidth part in which the paging message is located includes: determining the first bandwidth part based on the terminal device identifier, a total quantity of paging occasions, and the weight factors respectively corresponding to the M bandwidth parts.

In a possible design, the first bandwidth part is a bandwidth part corresponding to a number of the paging message, and the number of the paging message satisfies the following formula: $floor \left(UE ID/\left(T*Ns\right)\right) mod {ΣW}_{i} .$

UE ID is the terminal device identifier, T is a quantity of paging frames, Ns is a quantity of paging occasions in one paging frame, and Wᵢ is a weight factor of an i^{th} bandwidth part of the M bandwidth parts.

In a possible design, before the determining the first bandwidth part from M bandwidth parts based on the terminal device identifier of the first terminal device, the method further includes: sending first information, where the first information is used for configuring the first initial downlink bandwidth part.

In a possible design, the first information includes a first field, and the first field is used for configuring a PDCCH CSS set in the first initial downlink bandwidth part.

For some possible designs and beneficial effect of the second aspect, refer to the first aspect. Details are not described again.

According to a third aspect, this application provides a communication method. The method may be performed by a terminal device, or may be performed by a chip or a circuit. Using a terminal device as an example, the method includes: sending first information, where the first information indicates that a first-type terminal device supports monitoring a first message on a first initial downlink bandwidth part that does not include an entire CORESET#0, and the first message includes a paging message and/or a paging early indication; receiving second information, where the second information is used for configuring the first initial downlink bandwidth part; and monitoring the first message based on the second information.

In embodiments of this application, the terminal device may report, to the network device, whether the terminal device is capable of or supports monitoring the paging message or the paging early indication on the first initial downlink bandwidth part that does not include the entire CORESET#0. The network device enables, by adjusting a configuration manner of the network device, the terminal device that supports monitoring the paging message or the paging early indication on the first initial downlink bandwidth part to monitor the paging message or the paging early indication on the first initial bandwidth part. In comparison with a manner in which the terminal device performs radio frequency retuning to an initial downlink bandwidth part (initial DL BWP) including the entire CORESET#0 for monitoring the paging message, in the foregoing solution, the paging message can be transferred to the first initial downlink bandwidth part, so that power consumption required for radio frequency retuning can be reduced. In addition, when the radio frequency of the terminal device is retuned to the initial downlink bandwidth part (initial DL BWP) including the entire CORESET#0, both the reduced capability user equipment and the conventional terminal device monitor paging on the CORESET#0 of the initial DL BWP. Consequently, congestion in receiving the paging message is easily caused, and paging load of the network device on the initial DL BWP is high. In the foregoing solution, paging configuration of the first-type terminal device is adjusted, so that paging of the reduced capability user equipment can be separated from paging of the initial DL BWP, thereby reducing paging load of the network device on the initial DL BWP.

In a possible design, the monitoring the first message based on second information includes: if the second information carries a first field, the first field is used for configuring a physical downlink control channel (PDCCH) common search space (CSS) set, and the PDCCH CSS set is located in the first initial downlink bandwidth part, monitoring the first message on a PDCCH corresponding to the PDCCH CSS set.

In a possible design, the monitoring the first message based on the second information includes: if the second information does not carry a first field, and the first field is used for configuring a PDCCH CSS set, skipping monitoring the first message on the first initial downlink bandwidth part.

In a possible design, the monitoring the first message based on second information includes: if the second information does not carry the first field, and the first field is used for configuring a PDCCH CSS set, monitoring the first message on a second initial downlink bandwidth part, where the second initial downlink bandwidth part is configured for a serving cell and includes an entire CORESET#0 in frequency domain of the serving cell.

In the foregoing three designs, the network device may control, by including the first field in the second information or not including the first field in the second information, the BWP in which the first message is located, to balance paging loads of the initial DL BWP and the first initial downlink bandwidth part.

In a possible design, if the first message is a paging message, the first field is a paging search space (pagingSearchSpace) field; or if the first message is a paging early indication, the first field is a paging early indication search space (pei-SearchSpace) field. If the first message includes the paging message and the paging early indication, the first field includes the pagingSearchSpace field and the pei-SearchSpace field.

In a possible design, the first information is carried in a random access message, a random access resource, random access configuration information, or terminal device assistance information.

In a possible design, the first initial downlink bandwidth part does not include a cell defining synchronization signal/physical broadcast channel block (Cell Defining SSB, CD-SSB).

According to a fourth aspect, this application provides a communication method. The method may be performed by a network device, or may be performed by a chip or a circuit. Using the network device as an example, the method includes: receiving first information, where the first information indicates that a first-type terminal device supports monitoring a first message on a first initial downlink bandwidth part that does not include an entire CORESET#0, and the first message includes a paging message and/or a paging early indication; sending second information, where the second information is used for configuring the first initial downlink bandwidth part; and sending the first message based on the second information.

In a possible design, the sending the first message based on the second information includes: if the second information carries a first field, the first field is used for configuring a PDCCH CSS set, and the PDCCH CSS set is located in the first initial downlink bandwidth part, sending the first message on a PDCCH corresponding to the PDCCH CSS set.

In a possible design, the sending the first message based on the second information includes: if the second information does not carry a first field, and the first field is used for configuring a PDCCH CSS set, skipping sending the first message on the first initial downlink bandwidth part. In a possible design, the sending the first message based on second information includes: if the second information does not carry the first field, and the first field is used for configuring a PDCCH CSS set, sending the first message on a second initial downlink bandwidth part, where the second initial downlink bandwidth part is configured for a serving cell and includes an entire CORESET#0 in frequency domain of the serving cell.

For some possible designs and beneficial effect of the fourth aspect, refer to the third aspect. Details are not described again.

According to a fifth aspect, this application provides a communication method. The method may be performed by a terminal device, or may be performed by a chip or a circuit. Using the terminal device as an example, the method includes: receiving first information, where the first information is used for configuring a first initial downlink bandwidth part that does not include an entire CORESET#0; and if the first information carries a first field, the first field is used for configuring a PDCCH CSS set, the PDCCH CSS set is located in the first initial downlink bandwidth part; and monitoring a first message on a PDCCH corresponding to the PDCCH CSS set, where the first message includes a paging message and/or a paging early indication.

In embodiments of this application, the network device enables, by adjusting a configuration manner of the network device, the terminal device that supports monitoring the paging message or the paging early indication on the first initial downlink bandwidth part to monitor the paging message or the paging early indication on the first initial bandwidth part. In comparison with a manner in which the terminal device performs radio frequency retuning to an initial downlink bandwidth part (initial DL BWP) including the entire CORESET#0 for monitoring the paging message, in the foregoing solution, the paging message can be transferred to the first initial downlink bandwidth part, so that power consumption required for radio frequency retuning can be reduced. In addition, when the radio frequency of the terminal device is retuned to the initial downlink bandwidth part (initial DL BWP) including the entire CORESET#0, both the reduced capability user equipment and the conventional terminal device monitor paging on the CORESET#0 of the initial DL BWP. Consequently, congestion in receiving the paging message is easily caused, and paging load of the network device on the initial DL BWP is high. In the foregoing solution, paging configuration of the first-type terminal device is adjusted, so that paging of the reduced capability user equipment can be separated from paging of the initial DL BWP, thereby reducing paging load of the network device on the initial DL BWP.

In a possible design, the method further includes: if the first information does not carry the first field, skipping monitoring the first message on the first initial downlink bandwidth part.

In a possible design, the method further includes: if the first information does not carry the first field, monitoring the first message on a second initial downlink bandwidth part, where the second initial downlink bandwidth part is configured for a serving cell, and includes the entire CORESET#0 in frequency domain of the serving cell.

In the foregoing two designs, the network device may control, by including the first field in the second information or not including the first field in the second information, the bandwidth part in which the paging message is located, to balance paging loads of the initial DL BWP and the first initial downlink bandwidth part.

In a possible design, if the first message is a paging message, the first field is a paging search space (pagingSearchSpace) field; or if the first message is a paging early indication, the first field is a paging early indication search space (pei-SearchSpace) field. If the first message includes the paging message and the paging early indication, the first field includes the pagingSearchSpace field and the pei-SearchSpace field.

In a possible design, before the receiving the first information, the method further includes: sending second information, where the second information indicates that the first-type terminal device supports monitoring the first message on the first initial downlink bandwidth part.

In the foregoing design, the terminal device may report, to the network device, whether the terminal device is capable of or supports monitoring the paging message or the paging early indication on the first initial downlink bandwidth part that does not include the entire CORESET#0. This helps improve a paging success rate.

In a possible design, the first information is carried in a random access message, a random access resource, random access configuration information, or terminal device assistance information.

In a possible design, the first initial downlink bandwidth part does not include a CD-SSB.

According to a sixth aspect, this application provides a communication method. The method may be performed by a network device, or may be performed by a chip or a circuit. The network device is used as an example. The method includes: sending first information, where the first information indicates that a first-type terminal device supports monitoring a first message on a first initial downlink bandwidth part that does not include an entire CORESET#0, and the first message includes a paging message and/or a paging early indication. If the first information carries a first field, the first field is used for configuring a PDCCH CSS set, and the PDCCH CSS set is located in the first initial downlink bandwidth part, send the first message on a PDCCH corresponding to the PDCCH CSS set, where the first message includes the paging message and/or the paging early indication.

In a possible design, the method further includes: if the first information does not carry the first field, skipping sending the first message on the first initial downlink bandwidth part.

In a possible design, the method further includes: if the first information does not carry the first field, sending the first message on a second initial downlink bandwidth part, where the second initial downlink bandwidth part is configured for a serving cell, and includes the entire CORESET#0 in frequency domain of the serving cell.

In a possible design, before the sending the first information, the method further includes: receiving second information, where the second information indicates that the first-type terminal device supports monitoring the first message on the first initial downlink bandwidth part.

For some possible designs and beneficial effect of the sixth aspect, refer to the fifth aspect. Details are not described again.

According to a seventh aspect, this application provides a communication method. The method may be performed by a terminal device, or may be performed by a chip or a circuit. Using a terminal device as an example, the method includes: receiving first information, where the first information is used for configuring a first initial downlink bandwidth part, the first initial downlink bandwidth part is configured for a first-type terminal device, the first initial downlink bandwidth part does not include a CD-SSB, the first initial downlink bandwidth part includes at least one NCD-SSB, and the at least one NCD-SSB includes a first NCD-SSB; and receiving the first NCD-SSB on the first initial downlink bandwidth part.

In this application, the first-type terminal device is enabled to monitor the NCD-SSB on the first initial downlink bandwidth part that does not include an entire CD-SSB. Compared with a case in which radio frequency of the terminal device is retuned to a bandwidth part that includes a CB-SSB for monitoring the CD-SSB, this application can reduce time for radio frequency retuning and power consumption caused by the radio frequency retuning.

In a possible design, the method further includes: determining, based on a first occasion, a time domain resource on which the first NCD-SSB is located. In the foregoing manner, the resource in which the NSD-SSB is located is associated with a paging occasion, so that an NCD-SSB associated with an occasion can be measured.

In a possible design, there is a first offset value between the time domain resource in which the first NCD-SSB is located and the first occasion.

In a possible design, the first offset value is less than a sending periodicity of the NCD-SSB.

In a possible design, the first NCD-SSB is located before the first occasion, and the first offset value is a minimum offset value in offset values between the at least one NCD-SSB and the first occasion. Alternatively, the first NCD-SSB is located before the first occasion, and the first NCD-SSB is an NCD-SSB in the at least one NCD-SSB whose time domain resource position is closest to the first occasion.

In the foregoing manner, measurement accuracy can be improved.

In a possible design, the first initial downlink bandwidth part does not include an entire CORESET#0.

In a possible design, the first occasion is any paging occasion in the first initial downlink bandwidth, or the first occasion is any paging early indication occasion in the first initial downlink bandwidth.

According to an eighth aspect, this application provides a communication method. The method may be performed by a network device, or may be performed by a chip or a circuit. Using the network device as an example, the method includes: sending first information, where the first information is used for configuring a first initial downlink bandwidth part that does not include a CD-SSB, the first initial downlink bandwidth part is configured for a first-type terminal device, the first initial downlink bandwidth part includes at least one NCD-SSB, and the at least one NCD-SSB includes a first NCD-SSB; and sending the first NCD-SSB on the first initial downlink bandwidth part.

In a possible design, the method further includes: determining, based on a first occasion, a time domain resource on which the first NCD-SSB is located, where the first occasion is any paging occasion in the first initial downlink bandwidth, or the first occasion is any paging pre-indicated occasion in the first initial downlink bandwidth.

For some possible designs and beneficial effect of the eighth aspect, refer to the seventh aspect. Details are not described again.

According to a ninth aspect, this application further provides a communication apparatus. The communication apparatus implements any method provided in the first aspect, the third aspect, the fifth aspect, or the seventh aspect. The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus in performing a corresponding function of the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a network device.

In a possible implementation, the communication apparatus includes corresponding function modules respectively configured to implement the steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to descriptions in the method provided in the first aspect, the third aspect, the fifth aspect, or the seventh aspect. Details are not described herein again.

According to a tenth aspect, this application further provides a communication apparatus. The communication apparatus implements any method provided in the second aspect, the fourth aspect, the sixth aspect, or the eighth aspect. The communication apparatus may be implemented by hardware, or may be implemented by executing corresponding software by hardware. The hardware or the software includes one or more units or modules corresponding to the foregoing functions.

In a possible implementation, the communication apparatus includes: a processor. The processor is configured to support the communication apparatus in performing a corresponding function of the network device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device.

In a possible implementation, the communication apparatus includes corresponding function modules respectively configured to implement the steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to descriptions in the method provided in the second aspect, the fourth aspect, the sixth aspect, or the eighth aspect. Details are not described herein again.

According to an eleventh aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method of the first aspect, the third aspect, the fifth aspect, or the seventh aspect and any possible design by using a logic circuit or by executing code instructions.

According to a twelfth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method of the second aspect, the fourth aspect, the sixth aspect, or the eighth aspect and any possible design by using a logic circuit or by executing code instructions.

According to a thirteenth aspect, a computer-readable storage medium is provided. The computer-readable storage medium stores a computer program or instructions. When the computer program or the instructions are executed by a processor, the method of any one of the first aspect to the eighth aspect and any possible design of any one of the first aspect to the eighth aspect is implemented.

According to a fourteenth aspect, a computer program product storing instructions is provided. When the instructions are run by a processor, the method of any one of the first aspect to the eighth aspect and any possible design of any one of the first aspect to the eighth aspect is implemented.

According to a fifteenth aspect, a chip system is provided. The chip system includes a processor, and may further include a memory. The chip is configured to implement the method of any one of the first aspect to the eighth aspect and any possible design of any one of the first aspect to the eighth aspect. The chip system may include a chip, or may include a chip and another discrete component.

According to a sixteenth aspect, a communication system is provided. The system includes the apparatus (for example, a terminal device) of the first aspect and the apparatus (for example, a network device) of the second aspect.

According to a seventeenth aspect, a communication system is provided. The system includes the apparatus (for example, a terminal device) of the third aspect and the apparatus (for example, a network device) of the fourth aspect.

According to an eighteenth aspect, a communication system is provided. The system includes the apparatus (for example, a terminal device) of the fifth aspect and the apparatus (for example, a network device) of the sixth aspect.

According to a nineteenth aspect, a communication system is provided. The system includes the apparatus (for example, a terminal device) of the seventh aspect and the apparatus (for example, a network device) of the eighth aspect.

For technical effect that can be achieved by the technical solutions of any one of the ninth aspect to the nineteenth aspect, refer to descriptions of technical effect that can be achieved by the technical solutions of the first aspect to the eighth aspect. Repeated parts are not described again.

### BRIEF DESCRIPTION OF DRAWINGS

FIG. 1 is a diagram of a configuration result of a RedCap-specific initial DL BWP according to an embodiment of this application;
FIG. 2 is a diagram of another configuration result of the RedCap-specific initial DL BWP according to an embodiment of this application;
FIG. 3 is a diagram of an architecture of a communication system according to an embodiment of this application;
FIG. 4 is a diagram of a connection between a terminal device and a network device according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
(1) A terminal device may be a device having a wireless transceiver function or a chip that can be disposed in any device, or may be referred to as user equipment (user equipment, UE), an access terminal, a subscriber unit, a subscriber station, a mobile station, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer with wireless sending and receiving functions, an extended reality (XR) device (such as a virtual reality (VR) device, an augmented reality (AR) device, or a mixed reality (MR) device), a wireless terminal in industrial control (industrial control), a wireless terminal in self-driving (self-driving), a wireless terminal in video surveillance, a wearable terminal device, and the like. Alternatively, the terminal device may be an eMBB UE, a URLLC UE, an uncrewed aerial vehicle, another internet of things (internet of things, IoT) device, a positioning device, or the like. For ease of description, the following uses a terminal as an example for detailed description.
(2) A network device may be an apparatus configured to implement a function of an access network device. Therefore, the network device may also be understood as the access network device. The access network device may be a device that in an access network and that communicates with a wireless terminal over an air interface through one or more cells, for example, may be a next generation NodeB (next Generation NodeB, gNB) in an NR system, or may be an evolved NodeB (evolutional node B, eNB) in a long term evolution (long term evolution, LTE) system. Alternatively, the network device may be an apparatus that can support the network device in implementing the function of the access network device, for example, a chip system. The apparatus may be mounted in the network device.

For example, the network device may be divided into a central unit (centralized unit, CU) and at least one distributed unit (distributed unit, DU). The CU may be configured to manage or control the at least one DU. In other words, the CU is connected to the at least one DU. In this structure, protocol layers of the network device in a communication system may be separated, a part of the protocol layers is controlled by the CU in a centralized manner, and functions of a part or all of remaining protocol layers are distributed in the DU. The CU controls the DU in a centralized manner. For example, the network device is a gNB. Protocol layers of the gNB include a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) sublayer, and a physical layer. For example, the CU may be configured to implement functions of the RRC layer, the SDAP layer, and the PDCP layer, and the DU may be configured to implement functions of the RLC layer, the MAC layer, and the physical layer. Protocol stacks included in the CU and the DU are not specifically limited in embodiments of this application.

### (3) First-type terminal

Embodiments of this application relate to two types of terminals: the first-type terminal and a second-type terminal. The first-type terminal may be a terminal with reduced capabilities compared to the second-type terminal. For example, the first-type terminal is reduced capability (reduced capability, REDCAP) user equipment (RedCap UE) or enhanced reduced capability (enhanced reduced capability, eREDCAP) user equipment (ERedCap UE). The RedCap UE may also be referred to as Release 17 UE, and the ERedCap UE may also be referred to as Release 18 UE.

For another example, the first-type terminal may be first-type RedCap UE, second-type RedCap UE, or third-type RedCap UE. The second-type RedCap UE has capabilities reduced relative to the first-type RedCap UE, and the third-type RedCap UE has capabilities reduced relative to the first-type RedCap UE and/or the second-type RedCap UE. For example, the first-type RedCap UE may be understood as the Release 17 UE, the second-type RedCap UE may be understood as the Release 18 UE, and the third-type RedCap UE may be understood as UE that appears in future communication development and that has capabilities further reduced relative to the Release 17 UE and/or the Release 18 UE.

The second-type terminal is legacy user equipment (legacy UE), for example, may be an enhanced mobile broadband (enhanced Mobile Broadband, eMBB) terminal or an ultra-reliable low-latency communication (ultra-reliable low-latency communication, URLLC) terminal.

A difference between the legacy UE and the RedCap UE includes one or more of the following.
1. Bandwidth capabilities are different. A maximum bandwidth supported by the legacy UE may be greater than a maximum bandwidth supported by the RedCap UE. For example, the legacy UE supports a maximum of 100 MHz frequency domain resources simultaneously used on one carrier to communicate with the network device, and the RedCap UE may support a maximum of 20 MHz, 10 MHz, or 5 MHz frequency domain resources on one carrier to communicate with the network device.
2. Quantities of transceiver antennas are different. An antenna configuration of the legacy UE may be greater than an antenna configuration of the RedCap UE. For example, a minimum antenna configuration supported by the legacy UE may be greater than a maximum antenna configuration supported by the RedCap UE. For example, the minimum antenna configuration supported by the legacy UE may be 4T2R, to be specific, in the minimum antenna configuration, four receive antennas are used to receive downlink signals, and two transmit antennas are used to send uplink signals. However, a maximum antenna configuration supported by the RedCap UE may be less than 4T2R. For example, the RedCap UE supports only 2R1T, or may support 2R2T.
3. Maximum uplink transmit power is different. Maximum uplink transmit power of the legacy UE may be greater than maximum uplink transmit power of the RedCap UE. For example, the maximum uplink transmit power of the legacy UE may be 23 dBm or 26 dBm, and the maximum uplink transmit power of the RedCap UE may be only one value from 4 dBm to 20 dBm.
4. The legacy UE and the RedCap UE correspond to different protocol versions. For example, an NR Rel-15 terminal and an NR Rel-16 terminal may be considered as the legacy UE, and the RedCap UE may be considered as an NR Rel-17 terminal.
5. The legacy UE and the RedCap UE support different carrier aggregation (carrier aggregation, CA) capabilities. For example, the legacy UE supports carrier aggregation, but the RedCap UE does not support carrier aggregation. For another example, both the RedCap UE and the legacy UE support carrier aggregation, but a maximum quantity of carrier aggregation simultaneously supported by the legacy UE is greater than a maximum quantity of carrier aggregation simultaneously supported by the RedCap UE. For example, the legacy UE may simultaneously support aggregation of a maximum of five carriers or 32 carriers, while the RedCap UE simultaneously supports aggregation of a maximum of two carriers.
6. The legacy UE and the RedCap UE have different frequency division duplex (frequency division duplex, FDD) capabilities. For example, the legacy UE supports full-duplex FDD, and the RedCap UE supports only half-duplex FDD.
7. The RedCap UE and the legacy UE have different data processing time capabilities. For example, a minimum delay between receiving downlink data by the legacy UE and sending feedback for the downlink data by the legacy UE is less than a minimum delay between receiving downlink data by the RedCap UE and sending the feedback for the downlink data by the RedCap UE; and/or a minimum delay between sending uplink data by the legacy UE and receiving the feedback for the uplink data by the legacy UE is less than a minimum delay between sending uplink data by the RedCap UE and receiving the feedback for the uplink data by the RedCap UE.
8. The legacy UE and the RedCap UE have different processing capabilities.
9. The legacy UE and the RedCap UE correspond to different uplink and/or downlink peak transmission rates.
10. The RedCap UE supports a downlink bandwidth part (bandwidth part, BWP) that is configured by UE-specific radio resource control (radio resource control, RRC) (UE-specific RRC) and that includes a cell defining SSB (cell defining SSB, CD-SSB) or a non cell defining SSB (non cell defining SSB, NCD-SSB). The legacy UE supports only a downlink BWP that is configured by UE-specific RRC and that includes a CD-SSB.
11. The RedCap UE supports performing NCD-SSB-based measurement in the downlink BWP configured by RRC.

The ERedCap UE may be understood as a terminal whose capability is further reduced compared to the RedCap UE. The ERedCap UE inherits most configurations of the RedCap UE, and further enhancement includes at least one of the following.
1. Uplink and downlink peak rates are 10 Mbps. For UE in a feature group FG 48-1, a peak rate is v*Q*f=3.2. v is a quantity of multiple-input multiple-output (multiple-input multiple-output, MIMO) layers (layer), Q is a modulation order, and f is a scaling factor. For UE in a feature group FG 48-2, when a quantity of layers is 1, a peak rate is v*Q*f=0.8; or when a quantity of layers is 2, a peak rate is v*Q*f=0.75.
2. For the UE in the FG 48-1, a maximum quantity of uplink or downlink unicast scheduling physical resource blocks (physical resource block, PRB) supported by a single slot (slot) or a single hop (hop) is 25 PRBs at 15 kHz or 12 PRBs at 30 kHz.
3. When a quantity of resource blocks (resource block, RB) scheduled for a physical downlink shared channel (physical downlink shared channel, PDSCH) of a random access response (random access response, RAR) or a PDSCH of a message B (MsgB) exceeds 25 PRBs at 15 kHz or 12 PRBs at 30 kHz, timing relaxation of 1/0.5 ms for RAR respectively corresponds to a 15/30 kHz subcarrier spacing (subcarrier spacing, SCS).

For ease of understanding of the solution, an example in which the first-type terminal is RedCap UE is used for description in this application.

### (4). Paging early indication (paging early indication, PEI)

Currently, a problem of terminal energy saving is discussed. Considering that as long as one terminal is paged, all terminals that monitor the same paging occasion (paging occasion, PO) are instructed to receive a paging message. For a terminal that is actually not paged, receiving the paging message causes unnecessary power consumption. For this problem, a possible solution is grouping terminals belonging to a same PO into a subgroup. A network pages terminals on a group basis, to reduce a false paging alarm probability, so that unnecessary power consumption of the terminals for paging reception is reduced. The PEI indicates, before a PO, whether the network device sends a paging message to the group of terminals. If the terminal receives the PEI before a group of POs, the terminal monitors a next PO. If the terminal does not receive the PEI, the terminal does not monitor the next PO.

### (5) RedCap-specific initial DL BWP and initial DL BWP

Currently, in an initial access phase, the network device configures a common BWP of a cell for the terminal to perform random access, including an initial downlink BWP (initial DL BWP) and an initial uplink BWP (initial UL BWP). If the system information 1 (system information block 1, SIB1) does not include configuration information of the initial downlink BWP, the initial downlink BWP is determined, by default, in an initial access phase by using frequency domain of a control resource set (control resource set, CORESET) #0 configured by a master information block (master information block, MIB). If the SIB1 includes the configuration information of the initial downlink BWP, a bandwidth of the initial downlink BWP is determined based on the configuration information. The initial downlink BWP includes an entire control resource set (control resource set, CORESET) #0. The initial downlink BWP further includes the CD-SSB. The initial downlink BWP is a cell-level BWP. For the legacy UE, the maximum bandwidth may be 100 MHz. Therefore, a maximum bandwidth of the initial downlink BWP may be configured as 100 MHz.

According to 3GPP specifications, a maximum bandwidth of the BWP cannot exceed a maximum bandwidth supported by the terminal. Otherwise, the terminal cannot access the network by default. Because the terminal can perform data transmission only within a BWP range, most parameters, for example, a physical layer parameter and a higher layer parameter, for the terminal to perform data transmission are configured based on the BWP. For the RedCap UE, because the maximum bandwidth of the RedCap UE is less than the maximum bandwidth of the legacy UE, the bandwidth of the initial DL BWP is greater than the maximum bandwidth of the RedCap UE. Based on this, the network device may configure an initial downlink BWP specific to the RedCap UE (RedCap-specific initial DL BWP), and the RedCap-specific initial DL BWP is used by the RedCap UE to perform random access. The RedCap-specific initial DL BWP does not exceed the maximum bandwidth supported by the RedCap UE. For example, for a RedCap UE with a maximum bandwidth of 20 MHz, the RedCap-specific initial DL BWP may be 20 MHz.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

Unless otherwise stated on the contrary, ordinal terms such as "first" and "second" mentioned in embodiments of this application are used to distinguish between a plurality of objects, and are not intended to limit sizes, content, a sequence, a time sequence, priorities, importance, or the like of the plurality of objects. For example, the first initial downlink bandwidth part and the second initial downlink bandwidth part are merely used for distinguishing between different bandwidth parts, but do not indicate different sizes, priorities, importance degrees, or the like of the two bandwidth parts.

It should be noted that in this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

The foregoing describes some terms in embodiments of this application. The following describes technical background in embodiments of this application.

Currently, in an initial access phase, a network device configures a common BWP of a cell for a terminal to perform random access, for example, an initial downlink BWP (initial DL BWP). After initial access, the terminal enters an RRC connected mode, and the network device may flexibly configure a user-level BWP for each terminal based on a bandwidth capability reported by the terminal.

For the initial access phase, the initial DL BWP is a cell-level BWP, in other words, the initial DL BWP is configured for the entire serving cell. According to 3GPP specifications, a maximum bandwidth of the BWP cannot exceed a maximum bandwidth supported by the terminal. Otherwise, the terminal cannot access a network by default. Because a bandwidth capability of RedCap UE is reduced, the initial DL BWP is greater than a maximum bandwidth supported by the RedCap UE. To enable the RedCap UE to access the network, a RedCap-specific initial DL BWP configured for the RedCap UE is currently introduced. A maximum bandwidth of the RedCap-specific initial DL BWP cannot exceed a maximum bandwidth supported by the RedCap UE, so that the RedCap UE can perform random access based on the RedCap-specific initial DL BWP.

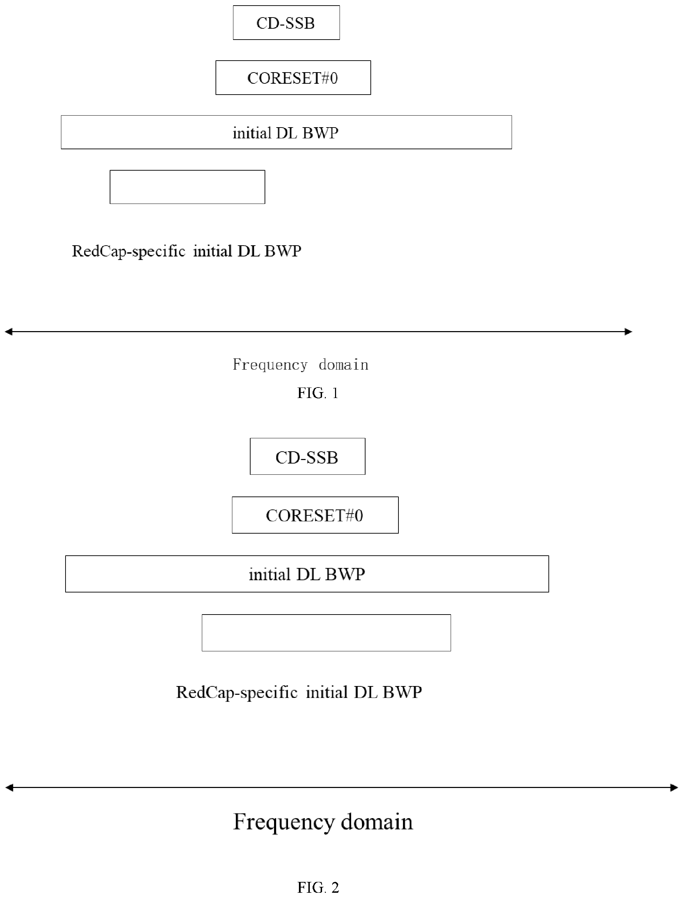

There are two configuration results of the RedCap-specific initial DL BWP. One is that a frequency domain resource position of the RedCap-specific initial DL BWP includes a cell defining synchronization signal/physical broadcast channel block (Cell Defining ss/pbch block, CD-SSB) and an entire control resource set (control resource set, CORESET) #0, as shown in FIG. 1. The other is that a frequency domain resource position of the RedCap-specific initial DL BWP includes a cell defining synchronization signal/physical broadcast channel block (Cell Defining ss/pbch block, CD-SSB) and an entire control resource set (control resource set, CORESET) #0, as shown in FIG. 2.

When the configuration result of the RedCap-specific initial DL BWP is as shown in FIG. 2, the RedCap UE may monitor, on the current RedCap-specific initial DL BWP, a physical downlink control channel (physical downlink control channel, PDCCH) corresponding to a common search space (common search space, CSS) set of a type (Type) 0 - PDCCH, that is, may monitor paging on a CORESET#0 included in the RedCap-specific initial DL BWP.

When the configuration result of the RedCap-specific initial DL BWP is as shown in FIG. 1, if the RedCap UE is in an idle (IDLE) state or an inactive (INACTIVE) state, behaviors of the RedCap UE are: monitoring a PDCCH corresponding to a Type1-PDCCH CSS set (that is, CORESET#0) configured based on a higher-layer parameter ra-searchspace; and skipping monitoring a PDCCH corresponding to a Type2-PDCCH CSS set configured based on a higher-layer parameter pagingSearchSpace. Because the RedCap-specific initial DL BWP does not include the entire CORESET#0, the RedCap UE cannot monitor paging on the common search space included in the current RedCap-specific initial DL BWP.

Based on this, embodiments of this application provide a communication method and apparatus, to resolve a problem of paging RedCap UE in an idle state or an inactive state. The method and the apparatus are based on a same inventive concept. Because the method and the apparatus have similar problem-resolving principles, for implementations of the apparatus and the method, refer to each other, and no repeated description is provided.

The communication method provided in this application may be applied to various communication systems, for example, an internet of things (internet of things, IoT), a narrowband internet of things (narrowband internet of things, NB-IoT), long term evolution (long term evolution, LTE), a 5th generation (5G) communication system, an LTE and 5G hybrid architecture, a 5G new radio (new radio, NR) system, and a 6G system or a new communication system emerging in future communication development. The 5G communication system in this application may include at least one of a non-standalone (non-standalone, NSA) 5G communication system and a standalone (standalone, SA) 5G communication system. The communication system may alternatively be a machine to machine (machine to machine, M2M) network or another network.

Communication between a network device and a terminal may be performed over a licensed spectrum (licensed spectrum), or may be performed over an unlicensed spectrum (unlicensed spectrum), or may be performed over both the licensed spectrum and the unlicensed spectrum. The network device and the terminal may communicate with each other by using a spectrum below 6G, may communicate with each other by using a spectrum above 6G, or may communicate with each other by using both the spectrum below 6G and the spectrum above 6G. A spectrum resource used between the network device and the terminal is not limited in embodiments of this application.

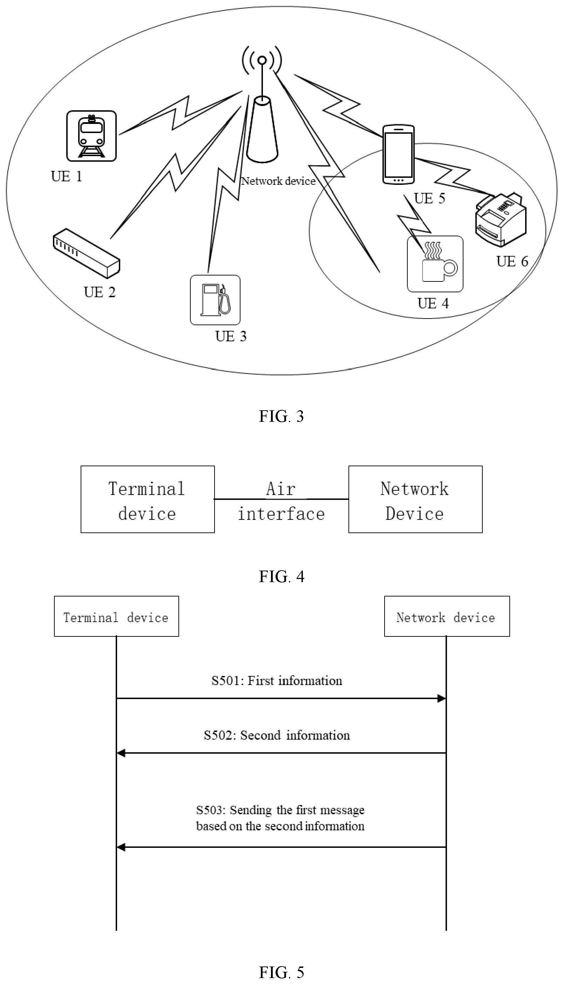

FIG. 3 shows a communication system according to an embodiment of this application. The communication system includes a network device and a plurality of terminals. For ease of description, in FIG. 3, an example in which the communication system includes a network device and six terminals is used. The six terminals are referred to as UE 1 to UE 6 for short. In the communication system, the UE 1 to the UE 6 may send uplink data to the network device, and the network device may receive the uplink data sent by the UE 1 to the UE 6. In addition, the UE 4 to the UE 6 may also form a communication subsystem. The network device may send downlink information to the UE 1, the UE 2, the UE 3, and the UE 5, and the UE 5 may send the downlink information to the UE 4 and the UE 6 based on a device-to-device (device-to-device, D2D) technology. FIG. 3 is merely a diagram, and a type of a communication system, a quantity of devices included in the communication system, a type of a device included in the communication system, and the like are not specifically limited.

For example, the network device and the terminal may be connected through an air interface. For example, a connection relationship between the network device and the terminal may be shown in FIG. 4.

Embodiments of this application may be applied to a communication system serving a first-type terminal, and certainly may also be applied to a communication system serving a second-type terminal, or a communication system serving both the first-type terminal and the second-type terminal.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes the technical solutions in embodiments of this application with reference to the accompanying drawings in embodiments of this application. For ease of description, in the following descriptions, an example in which the method is performed by a network device and a terminal is used. In this application, an RRC state of the terminal may be an idle state or an inactive state. Using RedCap UE as an example, the following describes the method in this application.

FIG. 5 is a schematic flowchart of a communication method according to this application. The method includes the following steps.

S501: A terminal sends first information. Correspondingly, a network device receives the first information.

Specifically, that the terminal sends the first information may also be referred to as that the terminal reports the first information. For example, the terminal may be RedCap UE, or ERedCap UE, or may be another UE supporting a narrowband BWP. Alternatively, the terminal may be first-type RedCap UE, second-type RedCap UE, or third-type RedCap UE. The second-type RedCap UE has capabilities reduced relative to the first-type RedCap UE, and the third-type RedCap UE has capabilities reduced relative to the first-type RedCap UE and/or the second-type RedCap UE.

The first information indicates that the first-type terminal supports monitoring the first message on a first initial downlink bandwidth part that does not include an entire CORESET#0, and the first message includes a paging message and/or the first message is a PEI. The monitoring the first message may also be replaced with monitoring a PDCCH determined based on a Type2-PDCCH CSS set. The first initial downlink bandwidth part may be understood as being configured for the first-type terminal, or may be described as that the first initial downlink bandwidth part is for the first-type terminal, or the first initial downlink bandwidth part is specific to the first-type terminal. For example, if the first-type terminal is the RedCap UE, the first initial downlink bandwidth part may be referred to as a RedCap-specific initial DL BWP.

A second initial downlink bandwidth part in the following is configured for an entire serving cell, and the second initial downlink bandwidth part includes a CD-SSB and an entire CORESET#0. For example, the second initial downlink bandwidth part may be referred to as an initial DL BWP.

In a possible implementation, the first initial downlink bandwidth part may alternatively not include the CD-SSB.

For example, the first-type terminal device is the RedCap UE, and a width of a frequency domain resource occupied by the first initial downlink bandwidth part may be 20 MHz, 10 MHz, 5 MHz, or 3 MHz.

It should be noted that step S501 is an optional step.

Optionally, the first information may be carried in a random access message, a random access resource, random access configuration (RA configuration) information, or user equipment assistance information (UE assistance information, UAI).

The random access resource may be a random access preamble sequence, a random access time-frequency space domain resource, a logical channel number, or the like. The random access message may be a message 1 (Msg1), a message 3 (Msg3), or a message A (MsgA) in a random access process.

In a possible implementation, the terminal may report the first information to a network in a feature (Feature) manner. In this implementation, the first information may indicate a capability, and the capability is having or supporting monitoring of the first message on the first initial downlink bandwidth that does not include the entire CORESET#0.

In another possible implementation, the terminal may report the first information to the network in a feature group (Feature Group) manner. In this implementation, the first information may indicate a group of capabilities, and the group of capabilities includes at least the following capabilities: having or supporting monitoring of the first message on the first initial downlink bandwidth part that does not include the entire CORESET#0.

S502: The network device sends second information. Correspondingly, the terminal receives the second information.

The second information is used for configuring the first initial downlink bandwidth part.

S503: The network device sends the first message based on the second information. Correspondingly, the terminal monitors the first message based on the second information.

In a possible implementation, the terminal may determine, based on whether the second information includes a first field, the BWP in which the first message is located. The first field is used for configuring a PDCCH CSS set in the first initial downlink bandwidth part. In a specific example, the first field is used for configuring the Type2-PDCCH CSS set or a Type2A-PDCCH CSS set.

In a specific implementation, if the second information carries the first field, the terminal monitors the first message on the PDCCH corresponding to the PDCCH CSS set configured based on the first field. Because the PDCCH CSS set is located in the first initial downlink bandwidth part, the terminal may monitor the first message on the first initial downlink bandwidth part.

If the second information does not carry the first field, the terminal does not monitor the first message on the first initial downlink bandwidth part, or the terminal retunes a radio frequency to the initial DL BWP to monitor the first message.

For example, if the first message includes the paging message, the first field includes a paging search space (pagingSearchSpace) field. A value of the pagingSearchSpace field may be a value corresponding to the Type2-PDCCH CSS set. If the first message includes a paging early indication, the first field includes a paging early indication search space (pei-SearchSpace) field. A value of the pei-SearchSpace field may be a value corresponding to the Type2A-PDCCH CSS set.

If the first message includes the paging message and the paging early indication, the first field includes the pagingSearchSpace field and the pei-SearchSpace field. The value of the pagingSearchSpace field may be the value corresponding to the Type2-PDCCH CSS set. The value of the pei-SearchSpace field may be the value corresponding to the Type2A-PDCCH CSS set.

It should be understood that if the terminal does not support monitoring the first message on the first initial downlink bandwidth part that does not include the entire CORESET#0, the configuration information (namely, the second information) of the first initial downlink bandwidth part does not include the first field. If the terminal supports monitoring the first message (or a PDCCH determined based on the Type2-PDCCH CSS set or the Type2A-PDCCH CSS set) on the first initial downlink bandwidth part that does not include the entire CORESET#0, the configuration information of the first initial downlink bandwidth part (that is, the second information) may include the first field, or may not include the first field, which depends on implementation of the network device.

In embodiments of this application, when the first initial downlink bandwidth part does not include the CD-SSB and the entire CORESET#0, the RedCap UE is capable of or supports monitoring, on the first initial downlink bandwidth part, the PDCCH determined based on the Type2-PDCCH CSS set (or the Type2A-PDCCH CSS set). Therefore, the network device may configure the Type2-PDCCH CSS set (or the Type2A-PDCCH CSS set) for the terminal, so that the terminal can monitor the paging message (or the PEI) in the Type2-PDCCH CSS set (or the Type2A-PDCCH CSS set) in the first initial downlink bandwidth part. Compared with a case in which the radio frequency of the terminal is retuned to the initial DL BWP for monitoring the paging message, according to the foregoing solution, the paging message may be transferred to the first initial downlink bandwidth part. In this way, power consumption required for radio frequency re-tuning can be reduced, and paging load of the initial DL BWP can be reduced, thereby reducing occupation of a paging capacity of eMBB UE due to an increase in a RedCap UE paging requirement.

The foregoing describes a manner of supporting the terminal in monitoring the paging message on the first initial downlink bandwidth part. Currently, the terminal may further perform radio frequency retuning to monitor paging on the second initial downlink bandwidth part. It can be learned that both the first initial downlink bandwidth part and the second initial downlink bandwidth part support paging. In this case, the terminal needs to determine a BWP to monitor paging. The following describes a method for determining, by a terminal from a plurality of BWPs that support paging, a BWP in which a paging message is located.

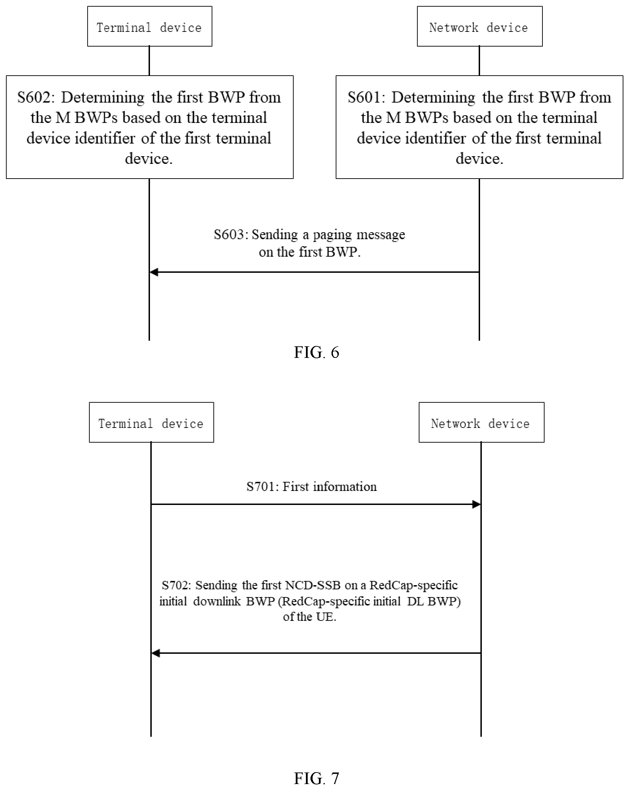

FIG. 6 is a schematic flowchart of a communication method according to this application. The method includes the following steps.

S601. A network device determines a first BWP from M BWPs based on a terminal identifier of a first terminal.

The M BWPs include a first initial downlink bandwidth part and a second initial downlink bandwidth part. M is an integer greater than or equal to 2.

The first initial downlink bandwidth part is for the first-type terminal, and the first initial downlink bandwidth part does not include a CD-SSB and an entire CORESET#0. The second initial downlink bandwidth part is configured for a serving cell, and includes the entire CORESET#0 in frequency domain of the serving cell.

In a possible implementation, the first initial downlink bandwidth part is for RedCap UE, or the first initial downlink bandwidth part is specific to the RedCap UE.

For example, the first terminal may be the RedCap UE, or ERedCap UE, or may be another UE supporting a narrowband BWP. Alternatively, the first terminal may be first-type RedCap UE, second-type RedCap UE, or third-type RedCap UE. The second-type RedCap UE has capabilities reduced relative to the first-type RedCap UE, and the third-type RedCap UE has capabilities reduced relative to the first-type RedCap UE and/or the second-type RedCap UE.

In a possible implementation, configuration information of the first initial downlink bandwidth part may include a pagingSearchSpace field, and the pagingSearchSpace field is used for configuring the paging message search space. In a specific example, the pagingSearchSpace field is used for a Type2-PDCCH CSS set. A value of the pagingSearchSpace field may be a value corresponding to the Type2-PDCCH CSS set. In this implementation, the Type2-PDCCH CSS set is configured in the first initial downlink bandwidth part. Therefore, the paging message may be sent on the first initial downlink bandwidth part.

For ease of understanding of the solution, the first initial downlink bandwidth part is referred to as a RedCap-specific initial DL BWP in the following. The second initial downlink bandwidth part is referred to as an initial DL BWP.

It may be understood that the M BWPs may further include another BWP supporting paging. This is not specifically limited herein.

It should be noted that there is no strict execution sequence between S601 and S602. S601 may be performed before S602, or S602 may be performed before S601, or S601 and S602 may be performed simultaneously.

In a possible application scenario, the foregoing manner may be in a scenario in which the network device configures, for the first terminal, a RedCap-specific initial DL BWP that does not include the CD-SSB and the entire CORESET#0. In this scenario, before S601 and S602, the network device sends first information to the first terminal. The first information is used for configuring the first initial downlink bandwidth part, that is, configuring the RedCap-specific initial DL BWP that does not include the CD-SSB and the entire CORESET#0.

Optionally, the terminal identifier of the first terminal may be determined in the following manner: If the first terminal is in an enhanced discontinuous reception (eDRX) state, the terminal identifier of the first terminal is UE_ID=5G-S-TMSI mod 4096; otherwise, the terminal identifier of the first terminal is UE_ID=5G-S-TMSI mod 1024. The 5G-S-TMSI is a 48-bit temporary mobile subscription identifier. The terminal may send first information to the network device during a radio resource control (radio resource control, RRC) establishment request process.

S602: The first terminal determines the first BWP from the M BWPs based on the terminal identifier of the first terminal.

The network device and the first terminal may determine the first BWP in a same manner. A specific determining manner is described in detail below.

S603: The network device sends the paging message on the first BWP. Correspondingly, the first terminal monitors the paging message on the first BWP.

In this application, a BWP is determined, based on an identifier of the terminal itself, from a plurality of BWPs supporting paging for monitoring the paging message, so that paging messages of the RedCap UE may be distributed over different BWPs, to avoid paging congestion and balancing paging load on the BWPs.

In a possible implementation, the network device may further send, on the first BWP, a PEI corresponding to the paging message.

Optionally, there is an offset value between a PO in which the paging message is located and a PEI-O in which the PEI corresponding to the paging message is located. Therefore, the network device may send the PEI on the first BWP based on the offset value.

The following describes a manner in which the network device and the terminal determine the first BWP.

In an implementation solution, the BWP in which the paging message is located may be determined based on the terminal identifier of the first terminal and weight factors respectively corresponding to the M BWPs. Optionally, the weight factor of the BWP may be a positive integer.

For example, the first BWP may be determined by performing, based on the terminal identifier of the first terminal, a modulo operation on a sum of weight factors of the M BWPs.

In an example, the first BWP may be a BWP corresponding to a parameter A, and the parameter A satisfies the following formula: $A = UE_ID mod \sum {W}_{i} .$

Wᵢ is a weight factor of an i^{th} bandwidth part of the M bandwidth parts. i is an integer greater than 0 and not greater than M.

For ease of understanding of the foregoing manner, the following describes two examples.

Example 1: Assuming that the M bandwidth parts include a RedCap-specific initial DL BWP and an initial DL BWP, if weight factors of the RedCap-specific initial DL BWP and the initial DL BWP are both 1, A=UE_ID mod ∑Wᵢ=UE_ID mod 2, and possible values of A include 0 and 1. Assuming that 0 corresponds to a RedCap-specific initial DL BWP, and 1 corresponds to the initial DL BWP, if A=0, the first BWP is the RedCap-specific initial DL BWP; or if A=1, the first BWP is the initial DL BWP.

Example 2: Assuming that the M bandwidth parts include a RedCap-specific initial DL BWP, an initial DL BWP, and a BWP 1, if a weight factor of the RedCap-specific initial DL BWP is 2, a weight factor of the initial DL BWP is 1, and a weight factor of the BWP 1 is 1, A =UE_ID mod ∑Wᵢ=UE_ID mod 4, and possible values of A include 0, 1, 2, and 3. Assuming that 0 and 1 correspond to the RedCap-specific initial DL BWPs, 2 corresponds to the initial DL BWP, and 3 corresponds to the BWP 1, if A=0 or 1, the first BWP is the RedCap-specific initial DL BWP; if A=2, the first BWP is the initial DL BWP; or if A=3, the first BWP is the BWP 1.

It should be understood that the foregoing example does not limit a correspondence between a value of the parameter A and a BWP.

For another example, the first BWP may be determined based on the terminal identifier, a total quantity of paging occasions, and the weight factors respectively corresponding to the M BWPs.

For example, all UE ID may be first grouped based on the total quantity of paging occasions, and UE ID in a same group are further grouped based on the weight factors respectively corresponding to the M BWPs. Based on this example, the first BWP may be a BWP corresponding to a number of a paging message, and the number of the paging message satisfies the following formula: $floor \left(UE ID/\left(T*Ns\right)\right) mod {ΣW}_{i} .$

UE ID is the terminal identifier, T is a quantity of paging frames, Ns is a quantity of paging occasions in one paging frame, and Wᵢ is the weight factor of the i^{th} bandwidth part of the M bandwidth parts.

For ease of understanding of the foregoing manner, the following describes two examples.

Example 1: Assuming that the M bandwidth parts include a RedCap-specific initial DL BWP and an initial DL BWP, if weight factors of the RedCap-specific initial DL BWP and the initial DL BWP are both 1, the number of the paging message=floor(UE ID/(T*Ns)) mod ΣWᵢ=floor(UE ID/(T*Ns)) mod 2, and possible values of the number of the paging message include 0 and 1. Assuming that 0 corresponds to the RedCap-specific initial DL BWP, and 1 corresponds to the initial DL BWP, if the number of the paging message is 0, the first BWP is the RedCap-specific initial DL BWP; or if the number of the paging message is 1, the first BWP is the initial DL BWP.

Example 2: Assuming that the M bandwidth parts include a RedCap-specific initial DL BWP, an initial DL BWP, and a BWP 1, if a weight factor of the RedCap-specific initial DL BWP is 2, a weight factor of the initial DL BWP is 1, and a weight factor of the BWP 1 is 1, the number of the paging message=floor(UE ID/(T*Ns)) mod ΣWᵢ=floor(UE ID/(T*Ns)) mod 4, and possible values of the number of the paging message include 0, 1, 2, and 3. Assuming that 0 and 1 correspond to the RedCap-specific initial DL BWP, 2 corresponds to the initial DL BWP, and 3 corresponds to the BWP 1, if the number of the paging message is 0 or 1, the first BWP is the RedCap-specific initial DL BWP; if the paging message number is 2, the first BWP is an initial DL BWP; or if the number of the paging message is 3, the first BWP is the BWP 1.

Optionally, the weight factors of the M BWPs may be predefined, or may be sent by the network device to the first terminal by using a broadcast message.

In this application, the BWP is determined, based on the identifier of the terminal itself, from a plurality of BWPs supporting paging for monitoring the paging message, so that paging messages of the RedCap UE may be distributed over different BWPs, to avoid paging congestion and balancing the paging load on the BWPs. In addition, the BWP for monitoring the paging message is determined based on the weight factor of the BWP, and paging load on the BWPs may be balanced by adjusting the weight factor of the BWP.

The foregoing describes a solution in which the terminal monitors the paging message on the BWP. Before monitoring the paging message, the terminal may obtain time-frequency synchronization by measuring a reference signal. For example, in an idle state or an inactive state, the terminal may obtain the time-frequency synchronization by measuring an SSB. It can be learned from the background that the frequency domain resource position of the RedCap-specific initial DL BWP may not include the CD-SSB. Therefore, the terminal needs to perform radio frequency retuning to receive the CD-SSB on the initial DL BWP, and a large delay and large power consumption are generated. This application provides another measurement method. In the method, an NCD-SSB may be monitored on a RedCap-specific initial DL BWP, and measurement may be performed based on the NCD-SSB. In this way, time for radio frequency retuning and power consumption caused by the radio frequency retuning can be reduced. FIG. 7 is a schematic flowchart of a communication method according to this application. The method includes the following steps.

S701: A network device sends first information. Correspondingly, a terminal receives the first information.

The first information is used for configuring a first initial downlink bandwidth part, the first initial downlink bandwidth part is configured for a first-type terminal, the first initial downlink bandwidth part does not include a CD-SSB, the first initial downlink bandwidth part includes at least one NCD-SSB, and the at least one NCD-SSB includes a first NCD-SSB. The first initial downlink bandwidth part may not include an entire CORESET#0. For ease of understanding of the solution, the first initial downlink bandwidth part is referred to as a RedCap-specific initial DL BWP in the following.

For example, the terminal may be RedCap UE, or ERedCap UE, or may be another UE supporting a narrowband BWP. Alternatively, the terminal may be first-type RedCap UE, second-type RedCap UE, or third-type RedCap UE. The second-type RedCap UE has capabilities reduced relative to the first-type RedCap UE, and the third-type RedCap UE has capabilities reduced relative to the first-type RedCap UE and/or the second-type RedCap UE.

S702: The network device sends the first NCD-SSB on a RedCap-specific initial DL BWP. Correspondingly, the terminal receives the first NCD-SSB on the RedCap-specific initial DL BWP.

In a possible implementation, the network device and the terminal may determine, based on a first occasion, a time domain resource in which the first NCD-SSB is located. The first occasion is any paging occasion in the RedCap-specific initial DL BWP, or the first occasion is any PEI occasion in the RedCap-specific initial DL BWP. There may be a first offset value between the time domain resource in which the first NCD-SSB is located and the first occasion. Optionally, the first offset value is less than a sending periodicity of the NCD-SSB. Specifically, the first offset value may be a quantity of slots (slot), a quantity of symbols, N milliseconds, or the like between the time domain resource in which the first NCD-SSB is located and the first occasion. For example, the first offset value may be less than or equal to 1, 2, 4, 8, 12, or 16 slot/slots. In another example, the first offset value may be less than or equal to 5 ms, 10 ms, 20 ms, 40 ms, or 160 ms.

The sending periodicity of the NCD-SSB may be the same as or different from a sending periodicity of the CD-SSB. The sending periodicity of the NCD-SSB may be predefined, or may be indicated by the first information, or may be configured in another manner. This is not specifically limited herein.

It should be understood that, for any paging occasion (or PEI occasion) in the RedCap-specific initial DL BWP, a corresponding NCD-SSB may be determined in a manner described in this application.

In an example, the first NCD-SSB is located before the first occasion, and the first offset value is a minimum offset value in offset values between the at least one NCD-SSB and the first occasion. Alternatively, it may be described as that the first NCD-SSB is located before the first occasion, and the first NCD-SSB is an NCD-SSB whose time domain resource position is closest to the first occasion in the at least one NCD-SSB.

In a possible implementation, the network device may indicate the first offset value by using the first information. In other words, the first information may indicate the relative positions of the first NCD-SSB and the first occasion by indicating the first offset value.

In this application, the NCD-SSB is monitored on the RedCap-specific initial DL BWP. Compared with a manner in which the radio frequency retuning is performed to monitor the CD-SSB on an initial DL BWP, time for radio frequency retuning and power consumption caused by the radio frequency retuning can be reduced.

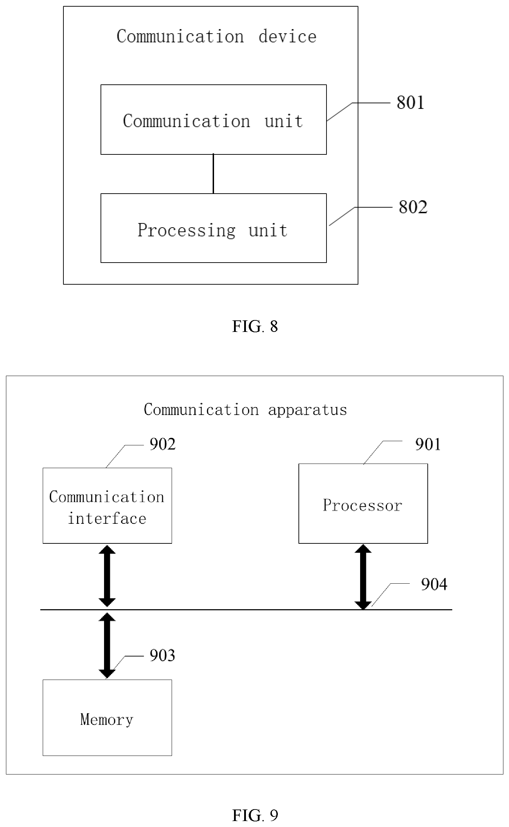

Based on a same concept as the method embodiments, an embodiment of this application provides a communication apparatus. A structure of the communication apparatus may be shown in FIG. 8. The communication apparatus includes a communication unit 801 and a processing unit 802.

In a specific implementation, the communication apparatus may be specifically configured to implement the method performed by the terminal in the embodiment in FIG. 6. The apparatus may be the terminal, or may be a chip or a chip set in the terminal, or a part of a chip that is configured to perform a part of a related method function. The processing unit 802 is configured to determine a first bandwidth part from M bandwidth parts based on a terminal identifier of a first terminal. The M bandwidth parts include a first initial downlink bandwidth part and a second initial downlink bandwidth part, and M is an integer greater than or equal to 2. The first initial downlink bandwidth part is for a first-type terminal, and the first initial downlink bandwidth part does not include a CD-SSB and an entire CORESET#0. The second initial downlink bandwidth part is configured for a serving cell, and includes the entire CORESET#0 in frequency domain of the serving cell. The communication unit 801 is configured to monitor a paging message on the first bandwidth part.

Optionally, the processing unit 802 is specifically configured to determine, based on the terminal identifier and weight factors respectively corresponding to the M bandwidth parts, a bandwidth part in which the paging message is located.

Optionally, the processing unit 802 is specifically configured to determine the first bandwidth part by performing a modulo operation on a sum of the weight factors of the M bandwidth parts based on the terminal identifier.

Optionally, the processing unit 802 is specifically configured to determine the first bandwidth part based on the terminal identifier, a total quantity of paging occasions, and the weight factors respectively corresponding to the M bandwidth parts.

For example, the first bandwidth part is a bandwidth part corresponding to a number of the paging message, and the number of the paging message satisfies the following formula: $floor \left(UE ID/\left(T*Ns\right)\right) mod {ΣW}_{i} .$

UE ID is the terminal identifier, T is a quantity of paging frames, Ns is a quantity of paging occasions in one paging frame, and Wᵢ is the weight factor of the i^{th} bandwidth part of the M bandwidth parts.

Optionally, the communication unit 801 is further configured to: before the processing unit 802 determines the first bandwidth part from the M bandwidth parts based on the terminal identifier of the first terminal, receive first information, where the first information is used for configuring the first initial downlink bandwidth part.

In a specific implementation, the communication apparatus may be specifically configured to implement the method performed by the network device in the embodiment in FIG. 6. The apparatus may be the network device, may be a chip or a chip set in the network device, or a part of the chip that is configured to perform a part of a related method function. The processing unit 802 is configured to determine a first bandwidth part from M bandwidth parts based on the terminal identifier of the first terminal. The M bandwidth parts include a first initial downlink bandwidth part and a second initial downlink bandwidth part, and M is an integer greater than or equal to 2. The first initial downlink bandwidth part is used for a first-type terminal, and the first initial downlink bandwidth part does not include a CD-SSB and an entire CORESET#0. The second initial downlink bandwidth part is configured for a serving cell, and includes an entire CORESET#0 in frequency domain of the serving cell. The communication unit 801 is configured to send a paging message in the first bandwidth part.

Optionally, the processing unit 802 is specifically configured to determine, based on the terminal identifier and weight factors respectively corresponding to the M bandwidth parts, a bandwidth part in which the paging message is located.

Optionally, the processing unit 802 is specifically configured to determine the first bandwidth part by performing a modulo operation on a sum of the weight factors of the M bandwidth parts based on the terminal identifier.

Optionally, the processing unit 802 is specifically configured to determine the first bandwidth part based on the terminal identifier, a total quantity of paging occasions, and the weight factors respectively corresponding to the M bandwidth parts.

For example, the first bandwidth part is a bandwidth part corresponding to a number of the paging message, and the number of the paging message satisfies the following formula: $floor \left(UE ID/\left(T*Ns\right)\right) mod {ΣW}_{i} .$

UE ID is the terminal identifier, T is a quantity of paging frames, Ns is a quantity of paging occasions in one paging frame, and Wᵢ is the weight factor of the i^{th} bandwidth part of the M bandwidth parts.

Optionally, the communication unit 801 is further configured to: before the processing unit 802 determines the first bandwidth part from the M bandwidth parts based on the terminal identifier of the first terminal, send first information, where the first information is used for configuring the first initial downlink bandwidth part.

In a specific implementation, the communication apparatus may be specifically configured to implement the method performed by the terminal in the embodiment in FIG. 5. The apparatus may be the terminal, or may be a chip or a chip set in the terminal, or a part of the chip that is configured to perform a part of a related method function. The processing unit 802 is configured to: send first information by using the communication unit 801, where the first information indicates that a first-type terminal supports monitoring a first message on a first initial downlink bandwidth part, the first message includes a paging message and/or a paging early indication, and the first initial downlink bandwidth part does not include an entire CORESET#0; receive second information by using the communication unit 801, where the second information is used for configuring the first initial downlink bandwidth part; and monitor the first message based on the second information by using the communication unit 801.

Optionally, when monitoring the first message based on the second information, the processing unit 802 is specifically configured to: if the second information carries a first field, the first field is used for configuring a PDCCH CSS set, and the PDCCH CSS set is located in the first initial downlink bandwidth part, monitor the first message on the PDCCH corresponding to the PDCCH CSS set.

Optionally, when monitoring the first message based on the second information, the processing unit 802 is specifically configured to: if the second information does not carry the first field, skip monitoring the first message on the first initial downlink bandwidth part.

Optionally, when monitoring the first message based on the second information, the processing unit 802 is specifically configured to: if the second information does not carry the first field, monitor the first message on a second initial downlink bandwidth part. The second initial downlink bandwidth part is configured for the serving cell, and includes the entire CORESET#0 in the frequency domain of the serving cell.

For example, if the first message is the paging message, the first field is a pagingSearchSpace field.

If the first message is the paging early indication, the first field is a pei-SearchSpace field.

If the first message includes the paging message and the paging early indication, the first field includes the pagingSearchSpace field and the pei-SearchSpace field.

For example, the first information is carried in a random access message, a random access resource, random access configuration information, or terminal assistance information.

For example, the first initial downlink bandwidth part does not include a CD-SSB.

In a specific implementation, the communication apparatus may be specifically configured to implement the method performed by the network device in the embodiment in FIG. 5. The apparatus may be the network device, may be a chip or a chip set in the network device, or a part of the chip that is configured to perform a part of a related method function. The processing unit 802 is configured to: receive first information by using the communication unit 801, where the first information indicates that a first-type terminal supports monitoring a first message on a first initial downlink bandwidth part, the first message includes a paging message and/or a paging early indication, and the first initial downlink bandwidth part does not include an entire control resource set CORESET#0; send second information by using the communication unit 801, where the second information is used for configuring the first initial downlink bandwidth part; and send the first message based on the second information by using the communication unit 801.

Optionally, when sending the first message based on the second information, the processing unit 802 is specifically configured to: if the second information carries a first field, the first field is used for a PDCCH CSS set, and the PDCCH CSS set is located in the first initial downlink bandwidth part, send the first message on a PDCCH corresponding to the PDCCH CSS set.

Optionally, when sending the first message based on the second information, the processing unit 802 is specifically configured to: if the second information does not carry the first field, skip sending the first message on the first initial downlink bandwidth part.

Optionally, when sending the first message based on the second information, the processing unit 802 is specifically configured to: if the second information does not carry the first field, send the first message on a second initial downlink bandwidth part. The second initial downlink bandwidth part is configured for the serving cell, and includes the entire CORESET#0 in the frequency domain of the serving cell.

For example, if the first message is the paging message, the first field is a pagingSearchSpace field.

If the first message is the paging early indication, the first field is a pei-SearchSpace field.

If the first message includes the paging message and the paging early indication, the first field includes the pagingSearchSpace field and the pei-SearchSpace field.

For example, the first information is carried in a random access message, a random access resource, random access configuration information, or terminal assistance information.

For example, the first initial downlink bandwidth part does not include a CD-SSB.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related descriptions in the method embodiments.

In a possible manner, the communication apparatus may be shown in FIG. 9. The apparatus may be a communication device or a chip in the communication device. The communication device may be the terminal in the foregoing embodiments or the network device in the foregoing embodiments. The apparatus includes a processor 901 and a communication interface 902, and may further include a memory 903. The processing unit 802 may be the processor 901. The communication unit 801 may be the communication interface 902. Optionally, the processor 901 and the memory 903 may alternatively be integrated together.

The processor 901 may be a central processing unit Central Processing Unit (CPU), a digital processing unit, or the like. The communication interface 902 may be a transceiver, an interface circuit like a transceiver circuit, a transceiver chip, or the like. The apparatus further includes a memory 903, configured to store a program executed by the processor 901. The memory 903 may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory 903 is any other medium that can be configured to carry or store expected program code in a form of instructions or a data structure and that can be accessed by a computer, but is not limited thereto.

The processor 901 is configured to execute the program code stored in the memory 903, and is specifically configured to perform an action of the processing unit 802. Details are not described in this application again. The communication interface 902 is specifically configured to perform an action of the communication unit 801. Details are not described herein again in this application.

A specific connection medium between the communication interface 902, the processor 901, and the memory 903 is not limited in this embodiment of this application. In this embodiment of this application, the memory 903, the processor 901, and the communication interface 902 are connected through a bus 904 in FIG. 9, and the bus is represented by a thick line in FIG. 9. A connection manner between other components is merely schematically described, and is not limited thereto. Buses may be classified into an address bus, a data bus, a control bus, and the like. For ease of representation, only one thick line is used to represent the bus in FIG. 9, but this does not mean that there is only one bus or only one type of bus.

An embodiment of this application further provides a computer-readable storage medium, configured to store computer software instructions that need to be executed by the processor. The computer software instructions include a program that needs to be executed by the processor.

An embodiment of this application further provides a communication system, including a communication apparatus configured to implement a function of the terminal in the embodiment in FIG. 5 and a communication apparatus configured to implement a function of the network device in the embodiment in FIG. 5.

An embodiment of this application further provides a communication system, including a communication apparatus configured to implement a function of the terminal in the embodiment in FIG. 6 and a communication apparatus configured to implement a function of the network device in the embodiment in FIG. 6.

An embodiment of this application further provides a communication system, including a communication apparatus configured to implement a function of the terminal in the embodiment in FIG. 7 and a communication apparatus configured to implement a function of the network device in the embodiment in FIG. 7.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method comprises:
determining a first bandwidth part from M bandwidth parts based on a terminal device identifier of a first terminal device, wherein the M bandwidth parts comprise a first initial downlink bandwidth part and a second initial downlink bandwidth part, M is an integer greater than or equal to 2, the first initial downlink bandwidth part is for a first-type terminal device, the first initial downlink bandwidth part does not comprise a cell defining synchronization signal/physical broadcast channel block CD-SSB and an entire control resource set CORESET#0, and the second initial downlink bandwidth part is configured for a serving cell and comprises the entire CORESET#0 in frequency domain of the serving cell; and
monitoring a paging message on the first bandwidth part.

2. The method according to claim 1, wherein the determining the first bandwidth part from the M bandwidth parts based on the terminal device identifier comprises:
determining, based on the terminal device identifier and weight factors respectively corresponding to the M bandwidth parts, a bandwidth part in which the paging message is located.

3. The method according to claim 2, wherein the determining, based on the terminal device identifier and the weight factors respectively corresponding to the M bandwidth parts, the bandwidth part in which the paging message is located comprises:
determining the first bandwidth part by performing a modulo operation on a sum of the weight factors of the M bandwidth parts based on the terminal device identifier.

4. The method according to claim 2, wherein the determining, based on the terminal device identifier and the weight factors respectively corresponding to the M bandwidth parts, the bandwidth part in which the paging message is located comprises:
determining the first bandwidth part based on the terminal device identifier, a total quantity of paging occasions, and the weight factors respectively corresponding to the M bandwidth parts.

5. The method according to claim 4, wherein the first bandwidth part is a bandwidth part corresponding to a number of the paging message, and the number of the paging message satisfies the following formula: $floor \left(UE ID/\left(T*Ns\right)\right) mod {ΣW}_{i} , wherein$ UE ID is the terminal device identifier, T is a quantity of paging frames, Ns is a quantity of paging occasions in one paging frame, and Wᵢ is a weight factor of an i^{th} bandwidth part of the M bandwidth parts.

6. The method according to any one of claims 1 to 5, wherein before the determining the first bandwidth part from M bandwidth parts based on the terminal device identifier of the first terminal device, the method further comprises:
receiving first information, wherein the first information is used for configuring the first initial downlink bandwidth part.

7. A communication method, wherein the method comprises:
determining a first bandwidth part from M bandwidth parts based on a terminal device identifier of a first terminal device, wherein the M bandwidth parts comprise a first initial downlink bandwidth part and a second initial downlink bandwidth part, M is an integer greater than or equal to 2, the first initial downlink bandwidth part is used for a first-type terminal device, the first initial downlink bandwidth part does not comprise a cell defining synchronization signal/physical broadcast channel block CD-SSB and an entire control resource set CORESET#0, and the second initial downlink bandwidth part is configured for a serving cell and comprises the entire CORESET#0 in frequency domain of the serving cell; and
sending a paging message in the first bandwidth part.

8. The method according to claim 7, wherein the determining the first bandwidth part from the M bandwidth parts based on the terminal device identifier comprises:
determining, based on the terminal device identifier and weight factors respectively corresponding to the M bandwidth parts, a bandwidth part in which the paging message is located.

9. The method according to claim 8, wherein the determining, based on the terminal device identifier and the weight factors respectively corresponding to the M bandwidth parts, the bandwidth part in which the paging message is located comprises:
determining the first bandwidth part by performing a modulo operation on a sum of the weight factors of the M bandwidth parts based on the terminal device identifier.

10. The method according to claim 8, wherein the determining, based on the terminal device identifier and the weight factors respectively corresponding to the M bandwidth parts, the bandwidth part in which the paging message is located comprises:
determining the first bandwidth part based on the terminal device identifier, a total quantity of paging occasions, and the weight factors respectively corresponding to the M bandwidth parts.

11. The method according to claim 10, wherein the first bandwidth part is a bandwidth part corresponding to a number of the paging message, and the number of the paging message satisfies the following formula: $floor \left(UE ID/\left(T*Ns\right)\right) mod {ΣW}_{i} , wherein$ UE ID is the terminal device identifier, T is a quantity of paging frames, Ns is a quantity of paging occasions in one paging frame, and Wᵢ is a weight factor of an i^{th} bandwidth part of the M bandwidth parts.

12. The method according to any one of claims 7 to 11, wherein before the determining the first bandwidth part from M bandwidth parts based on the terminal device identifier of the first terminal device, the method further comprises:
sending first information, wherein the first information is used for configuring the first initial downlink bandwidth part.

13. A communication method, wherein the method comprises:
sending first information, wherein the first information indicates that a first-type terminal device supports monitoring a first message on a first initial downlink bandwidth part, the first message comprises a paging message and/or a paging early indication, and the first initial downlink bandwidth part does not comprise an entire control resource set CORESET#0;
receiving second information, wherein the second information is used for configuring the first initial downlink bandwidth part; and
monitoring the first message based on the second information.

14. The method according to claim 13, wherein the monitoring the first message based on the second information comprises:
if the second information carries a first field, and the first field is used for configuring a physical downlink control channel PDCCH common search space CSS set, and the PDCCH CSS set is located on the first initial downlink bandwidth part, monitoring the first message on a PDCCH corresponding to the PDCCH CSS set.

15. The method according to claim 13, wherein the monitoring the first message based on the second information comprises:
if the second information does not carry a first field, and the first field is used for configuring a PDCCH CSS set, skipping monitoring the first message on the first initial downlink bandwidth part.

16. The method according to any one of claims 13 to 15, wherein the monitoring the first message based on the second information comprises:
if the second information does not carry the first field, and the first field is used for configuring the PDCCH CSS set, monitoring the first message on a second initial downlink bandwidth part, wherein the second initial downlink bandwidth part is configured for a serving cell and comprises an entire CORESET#0 in frequency domain of the serving cell.

17. The method according to any one of claims 14 to 16, wherein if the first message is a paging message, the first field is a paging search space pagingSearchSpace field; or
if the first message is a paging early indication, the first field is a paging early indication search space pei-SearchSpace field; and
if the first message comprises the paging message and the paging early indication, the first field comprises the pagingSearchSpace field and the pei-SearchSpace field.

18. The method according to any one of claims 13 to 17, wherein the first information is carried in a random access message, a random access resource, random access configuration information, or terminal device assistance information.

19. The method according to any one of claims 13 to 18, wherein the first initial downlink bandwidth part does not comprise a cell defining synchronization signal/physical broadcast channel block CD-SSB.

20. A communication method, wherein the method comprises:
receiving first information, wherein the first information indicates that a first-type terminal device supports monitoring a first message in a first initial downlink bandwidth part, the first message comprises a paging message and/or a paging early indication, and the first initial downlink bandwidth part does not comprise an entire control resource set CORESET#0;
sending second information, wherein the second information is used for configuring the first initial downlink bandwidth part; and
sending the first message based on the second information.

21. The method according to claim 20, wherein the sending the first message based on the second information comprises:
if the second information carries a first field, the first field is used for configuring a physical downlink control channel PDCCH common search space CSS set, and the PDCCH CSS set is located in the first initial downlink bandwidth part, sending the first message on a PDCCH corresponding to the PDCCH CSS set.

22. The method according to claim 20, wherein the sending the first message based on the second information comprises:
if the second information does not carry a first field, the first field is used for configuring a PDCCH CSS set, skipping sending the first message in the first initial downlink bandwidth part.

23. The method according to any one of claims 20 to 22, wherein the sending the first message based on the second information comprises:
if the second information does not carry the first field, and the first field is used for configuring the PDCCH CSS set, sending the first message on a second initial downlink bandwidth part, wherein the second initial downlink bandwidth part is configured for a serving cell and comprises an entire CORESET#0 in frequency domain of the serving cell.

24. The method according to any one of claims 21 to 23, wherein if the first message is a paging message, the first field is a paging search space pagingSearchSpace field; or
if the first message is a paging early indication, the first field is a paging early indication search space pei-SearchSpace field; and
if the first message comprises the paging message and the paging early indication, the first field comprises the pagingSearchSpace field and the pei-SearchSpace field.

25. The method according to any one of claims 20 to 24, wherein the first information is carried in a random access message, a random access resource, random access configuration information, or terminal device assistance information.

26. The method according to any one of claims 20 to 25, wherein the first initial downlink bandwidth part does not comprise a cell defining synchronization signal/physical broadcast channel block CD-SSB.

27. A communication apparatus, comprising a unit or module configured to perform the method according to any one of claims 1 to 6, a unit or module configured to perform the method according to any one of claims 7 to 12, a unit or module configured to perform the method according to any one of claims 13 to 19, or a unit or module configured to perform the method according to any one of claims 20 to 26.

28. A communication apparatus, comprising a processor and a memory, wherein the memory is configured to store program instructions, and when the processor executes the program instructions, the method according to any one of claims 1 to 6 is performed, the method according to any one of claims 7 to 12 is performed, the method according to any one of claims 13 to 19 is performed, or the method according to any one of claims 20 to 26 is performed.

29. A computer-readable storage medium, wherein the computer-readable storage medium stores a computer-readable instruction, and when the computer-readable instruction runs on a communication apparatus, the method according to any one of claims 1 to 6 is performed, or the method according to any one of claims 7 to 12 is performed, or the method according to any one of claims 13 to 19 is performed, or the method according to any one of claims 20 to 26 is performed.

30. A computer program product, wherein when the computer program product runs on a device, the device is enabled to perform the method according to any one of claims 1 to 6, the method according to any one of claims 7 to 12, the method according to any one of claims 13 to 19, or the method according to any one of claims 20 to 26.
